Europäisches Patentamt

European Patent Office

Office européen des brevets

(11) Veröffentlichungsnummer: **0 330 947**
**A2**

(12) **EUROPÄISCHE PATENTANMELDUNG**

(21) Anmeldenummer: **89102867.2**

(22) Anmeldetag: **20.02.89**

(51) Int. Cl.⁴: **G02B 1/04 , C08L 1/10**

(30) Priorität: **02.03.88 DE 3806631**

(43) Veröffentlichungstag der Anmeldung:
**06.09.89 Patentblatt 89/36**

(84) Benannte Vertragsstaaten:
**AT BE CH DE ES FR GB IT LI NL SE**

(71) Anmelder: **BAYER AG**

**D-5090 Leverkusen 1 Bayerwerk(DE)**

(72) Erfinder: **Wingler, Frank, Dr.**
**Walter-Flex-Strasse 17**
**D-5090 Leverkusen 1(DE)**
Erfinder: **Geyer, Otto-Christian, Dr.**
**Bahnhofstrasse 12**
**D-6330 Wetzlar(DE)**

(54) **Kontaktoptische Gegenstände aus einer Polymermischung.**

(57) Die kontaktoptischen Gegenstände bestehen aus einer homogenen Mischung von Celluloseestern und Polycaprolacton.

EP 0 330 947 A2

## Kontaktoptische Gegenstände aus einer Polymermischung

Die Erfindung betrifft kontaktoptische Gegenstände aus einer homogenen Mischung eines Cellusloseesters und Polycaprolacton und deren Herstellung.

Kontaktoptische Gegenstände im Rahmen der vorliegenden Erfindung sind bevorzugt Kontaktlinsen und Skleralschalen.

Als kontaktoptische Gegenstände werden bereits eine Reihe von verschiedenen Polymeren eingesetzt. Die Materialien sitzen unmittelbar auf der Hornhaut und beeinflussen daher wesentlich die Stoffwechselvorgänge sowie den Sauerstoffhaushalt. Durch den Kontakt können Reizeinwirkungen der Materialien direkt auf das Auge erfolgen.

Kontaktlinsen werden im allgemeinen in zwei Haupttypen eingeteilt, nämlich in harte Linsen und in hydrophile weiche Linsen. Linsen der ersten Art sind schon seit vielen Jahren bekannt und werden üblicherweise aus Polymethylmethacrylat hergestellt, das geschnitten und poliert werden kann, wodurch Linsen mit guten optischen Eigenschaften erhalten werden. Harte Polymethylmethacrylat-Linsen haben jedoch den Nachteil, daß sie die Hornhaut und das Innere des Augenlides reizen. Wenn ein Patient harte Linsen tragen soll, dann erfordert dies eine erhebliche Eingewöhnungszeit, während der Patient die Linsen in allmählich zunehmenden Zeiträumen trägt. Aufgrund dieses Mangels werden die harten Linsen nur von einem geringen Teil der Patienten angewendet.

In den letzten Jahren sind nun weiche Kontaktlinsen eingeführt worden, die aus Hydrogelen oder hydrophilen Polymeren bestehen. Durch sie konnte das Problem der Augenreizung zum großen Teil überwunden werden, so daß die Patienten sich nunmehr an das Tragen von Kontaktlinsen viel rascher anpassen. Die herkömmlichen weichen Linsen haben jedoch - wie die harten Linsen - den Nachteil, daß beide Linsentypen nicht dazu imstande sind, der Hornhaut genügend Sauerstoff zuzuführen, damit ihre normale Stoffwechselgeschwindigkeit aufrechterhalten wird. Die Hornhautoberfläche muß nämlich eine angemessene Sauerstoffzuführung erhalten, damit die Hornhaut transparent und gesund bleibt. Es hat sich gezeigt, daß zur Vermeidung von histologisch erfaßbaren Veränderungen in dem Hornhautepithel in der Nachbarschaft der Hornhaut eine Minimalatmosphäre von 5 Gew.-% Sauerstoffäquivalenten aufrechterhalten werden muß (American Journal of Optometry 49 (4), 1972, 329-332). Eine Atmosphäre von 5 % Sauerstoffäquivalent wird einer gasförmigen Atmosphäre als äquivalent definiert, welche 5 Vol-% Sauerstoff und 95 Vol-% Stickstoff enthält.

Es sind ebenfalls Polymermischungen aus Celluloseacetobutyraten mit Polyethylen-co-Vinylacetaten bekannt (D-OS 2 807 663); diese haben den Nachteil einer relativ starken Lichtstreuung im hydratisierten Zustand, was zu Blenderscheinungen führen kann.

Außerdem sind Kontaktlinsen bekannt, die aus Mischungen von Celluloseacetobutyrat und aliphatischen Polyester-Polycarbonaten bestehen. Diese Kontaktlinsen weisen eine geringe Langzeitstabilität auf.

Kontaktlinsenmaterialien auf Basis von Copolymeren von Estern der Methacrylsäure mit Polysiloxanen (US 4 120 570), haben den Nachteil der Schlecht benetzbaren Oberfläche. Zu ihrer Hydrophilierung müssen aus diesen Materialien hergestellte Kontaktlinsen oberflächlich nachbehandelt werden.

Es wurden kontaktopische Gegenstände aus einer homogenen Mischung von

94 bis 99 Gew.-teilen eines Celluloseesters einer aliphatischen Carbonsäure ($C_1$-$C_5$) und

1 bis 6 Gew.-teilen eines Polycaprolactons mit einer mittleren Molmasse im Bereich von 5.000 bis 60.000 gefunden.

Die neuen kontaktoptischen Gegenstände zeigen eine geringe Lichtstreuung und hohe Stabilität. Das Wasseraufnahmevermögen liegt im Bereich von 0,5 bis 3 Gew.-%, bevorzugt von 0,7 bis 2,0 Gew.-%.

Die Lichtstreuung der erfindungsgemäßen kontaktoptischen Gegenstände liegt im Bereich von 10 bis 25 %, bevorzugt von 15 bis 20 %, gemessen en einer hydratisierten 2 x 40 x 60 mm spritzgegossenen Prüfplatte.

Als Celluloseester seien aliphatische Ester mit 1 bis 5 Kohlenstoffatomen genannt. Der Säurerest kann geradlinig oder verzweigt sein. Beispielsweise seien die Formyl-, Acetyl-, Propionyl-, Butyryl- und Pentyryl-Reste genannt. Bevorzugt sind Acetyl- und Butyryl-Reste.

Es ist auch möglich, gemischte Ester einzusetzen. Insbesondere bevorzugt sind gemischte Celluloseester der Buttersäure und der Essigsäure.

Die Hydroxylgruppen der Cellulose können ganz oder teilweise verestert sein.

Bevorzugte Celluloseester enthalten im allgemeinen 40 bis 50 Gew.-% eines Buttersäurerestes, 15 bis 26 Gew.-% eines Essigsäurerestes und 0,75 bis 1,95 Gew.-% Hydroxylgruppen.

Insbesondere bevorzugte Celluloseester enthalten 42 bis 46 Bew.-% Buttersäurereste, 18 bis 21 Gew.-% Essigsäurereste und 1,0 bis 1,7 Gew.-% Hydroxylgruppen.

Die Celluloseester sind an sich bekannt (Ullman, Enzyklopädie der technischen Chemie, Band 5, 182-201 (1963)) und können beispielsweise durch Veresterung von Baumwolllinters mit Buttersäure und Essigsäureanhydrid hergestellt werden.

Die relativen Viskositäten ($\eta_{rel}$) von 2 %igen Lösungen der Celluloseester in Aceton liegen bei 25° C im Bereich von 3,5 bis 5,0, bevorzugt von 4,0 bis 4,5 [dl/g].

Polycaprolactone für die erfindungsgemäßen kontaktoptischen Gegenstände sind linear verknüpfte Polyester der 6-Hydroxyhexansäure. Sie haben mittlere Molmassen im Bereich von 5.000 bis 60.000, bevorzugt von 10.000 bis 30.000.

Die Polycaprolactone sind an sich bekannt und können beispielweise durch Polymerisation von ε-Caprolacton mit Säuren oder metallorganichen Reagenzien hergestellt werden (G. Greber und H. Gruber in Houben-Weyl, Methoden der organischen Chemie, Bd. E 20/2, S. 1406-1407, G. Thieme-Verlag, Stuttgart 1987).

Es wurde auch ein Verfahren zur Herstellung der erfindungsgemäßen kontaktoptischen Gegenstände gefunden, das dadurch gekennzeichnet ist, daß man 94 bis 99 Gew.-teile eines Celluloseesters einer aliphatischen Carbonsäure ($C_1$-$C_5$) und
1 bis 6 Gew.-% eines Polycaprolactons mit einer mittleren Molmasse von 5.000 bis 60.000
durch intensives Mischen in Schmelze zu einer homogenen Masse verarbeitet, aus der dann entweder ein Rohling hergestellt wird, der spanabhebend bearbeitet und poliert wird, oder die dann direkt in die Endform gebracht wird.

Die Herstellung der homogenen Masse aus organischen Celluloseestern und Polycaprolacton erfolgt durch intensives Vermischen der Komponenten in der Schmelze. Es können hierzu bekannte Mischverfahren benutzt werden, wie z.B. das Mischen auf Walzwerken oder in Schneckenextrudern. Die erfindungsgemäßen zu verwendenden Mischungen aus organischen Celluloseestern und Polycaprolactonen lassen sich auf an sich bekannten Extrudern und Spritzgußmaschinen kontinuierlich und diskontinuierlich verarbeiten und zeigen dabei eine gute Fließfähigkeit.

Aus den homogenen Massen können direkt im Spritzgußverfahren die kontaktoptischen Gegenstände hergestellt werden. Man kann aber auch zunächst einmal Rohlinge herstellen und diese spanabhebend bearbeiten und anschließend polieren.

Die neuen kontaktoptischen Gegenstände sind insbesondere für die Fertigung von Skleralschalen nach Tiefziehver fahren aus Folien geeignet. Hierzu verwendbare Folien werden entweder aus Lösungen (z.B. Tetrahydrofuran) gegossen und durch Extrusion, Spritzguß oder Auspressen gewonnen. Gegenüber herkömmlichen Materialien für die Skleralschalenfertigung läßt sich besonders vorteilhaft hier das Tiefziehverfahren anwenden.

Beispiel

Auf einem konischen gleichrotierenden Zweiwellenextruder wird bei 180° C Schneckentemperatur eine Polymermischung aus 95 Gew.-% Celluloseacetobutyrat (Hydroxylgehalt: 1,7 Gew.-%, Buttersäuregehalt: 46,5 Gew.-%, Essigsäuregehalt: 20 Gew.-%) und 5 Gew.-% Polycaprolacton (mittleres Molekulargewicht: 20.000) gemischt, zu einem Strang gezogen und granuliert. Das Granulat wird auf einer Spritzgußmaschine zu Platten der Abmessung 40 x 60 x 2 mm verspritzt und die Platten bei 175° C auf einer Tafelpresse zwischen zwei auf Hochglanz polierten, verchromten Stahlplatten zu 0,5 mm dicken Folien ausgepreßt. Die Platten werden durch das an sich bekannte Tiefziehverfahren (EP-A 0 170 046) zu Skleralschalen verarbeitet und bei Patienten getestet. Nach Aussagen der Patienten zeigen die erfindungsgemäßen Skleralschalen ein besseres Trageverhalten und eine geringere Blendwirkung bei sonst gleicher Reizfreiheit und Langzeitstabilität.

Das Wasseraufnahmevermögen des erfindungsgemäßen Materials beträgt 1,5 Gew.-%.

Zur Messung des Streulichtes werden 2 x 40 x 60 mm Prüfplättchen spritzgegossen und 6 Tage in 0.9-prozentiger Natriumchlorid-Lösung (isotonische Kochsalz-Lösung) gelagert. Zur Streulichtmessung wird die hydratisierte Platte an die Lichteintrittsöffnung einer schwarzen Photometerkugel gestellt. Der beleuchtete Strahl geht durch die Platte und fällt auf der gegenüberliegenden Seite der Kugel in eine Lichtfalle. Das aus der eigent lichen Strahlrichtung abgestreute Licht wird durch die Photometerkugel aufgefangen und mit einem Diano-Spektralphotometer im Wellenlängenbereich von 400 bis 700 nm als Funktion der Wellenlänge dargestellt. Der Streulichtanteil wird bei 460 nm gemessen. Er betrug im Falle der Erfindung 20%.

Ansprüche

1. Kontaktoptische Gegenstände aus einer homogenen Mischung von
94 bis 99 Gew.-teilen eines Celluloseesters einer aliphatischen Carbonsäure ($C_1$-$C_5$) und
1 bis 6 Gew.-teilen eines Polycaprolactons mit einer mittleren Molmasse im Bereich von 5.000 bis 60.000.

2. Kontaktoptische Gegenstände nach Anspruch 1, dadurch gekennzeichnet, daß als Celluloseester ein Gemisch aus Essigsäure- und Buttersäureester eingesetzt wird.

3. Polmermischungen nach den Ansprüchen 1 und 2, dadurch gekennzeichnet, daß ein Cellulosester eingesetzt wird, der 40 bis 50 Gew.-% eines Buttersäurerestes, 15 bis 26 Gew.-% eines Essigsäurerestes und 0.75 bis 1,95 Gew.-% an Hydroxylgruppen enthält.

4. Verfahren zur Herstellung von kontaktoptischen Gegenständen, dadurch gekennzeichnet, daß man

94 bis 99 Gew.-teilen eines Celluloseesters einer aliphatischen Carbonsäure ($C_1$-$C_5$) und

1 bis 6 Gew.-teile eines Polycaprolactons mit einer mittleren Molmasse im Bereich von 5.000 bis 60.000

durch intensives Mischen zu einer homogenen Masse verarbeitet und daraus entweder Rohlinge herstellt, die spanabhebend bearbeitet und poliert werden, oder die direkt in die Endform gebracht werden.

5. Verwendung einer homogenen Polymermischung aus

94 bis 99 Gew.-teilen eines Celluloseesters einer aliphatischen Carbonsäure ($C_1$-$C_5$) und

1 bis 6 Gew.-teile eines Polycaprolactons mit einer mittleren Molmasse im Bereich von 5.000 bis 60.000

zur Herstellung von kontaktoptischen Gegenständen.

6. Verwendung nach Anspruch 5 zur Herstellung von Kontaktlinsen und Skleralschalen.